# EUROPEAN PATENT APPLICATION

(11) **EP 4 590 007 A1**
(43) Date of publication of application: **23.07.2025**
(21) Application number: 23864612.9
(22) Date of filing: 06.09.2023
(51) Int. Cl.: H04W 12/06

(54) **REGISTRATION METHOD AND APPARATUS, AND READABLE STORAGE MEDIUM**

(30) Priority: 13.09.2022 CN 202211119073
(71) Applicant: Datang Mobile Communications Equipment Co., Ltd., Beijing 100085 (CN)
(72) Inventor: WANG, Yapeng, Beijing 100085 (CN); XU, Hui, Beijing 100085 (CN); HU, Weiqi, Beijing 100085 (CN); CHENG, Zhimi, Beijing 100085 (CN); LIU, Xianfeng, Beijing 100085 (CN); ZHOU, Wei, Beijing 100085 (CN); LIU, Qiang, Beijing 100085 (CN)
(74) Representative: Studio Torta S.p.A.
(86) International application number: PCT/CN2023/117173
(87) International publication number: WO 2024/055880

(57) **Abstract**

A registration method, an apparatus and a readable storage medium are provided, which relate to the field of communication technology. The method includes: sending, by a terminal, a first registration request to a core network device, where the first registration request is configured to request a computing power registration and a computing power authentication for the terminal; receiving, by the terminal, a first registration response sent by the core network device.

## Description

### CROSS REFERENCE OF RELATED APPLICATION

The present disclosure claims a priority of Chinese patent disclosure No. 202211119073.3 filed on September 13, 2022, which is incorporated herein by reference in its entirety.

### TECHNICAL FIELD

The present application relates to the field of communication technology, and in particular to a registration method, an apparatus and a readable storage medium.

### BACKGROUND

Before computing resources are managed by the computing network management center, computing power registration and computing power authentication must be performed first. Only after authentication can the resources be managed by the computing network management center and subsequent computing power scheduling and scheduling be performed.

The current computing power network is mainly aimed at the bearer network, and its computing power registration process mainly registers resources such as physical servers, virtual machines, containers, heterogeneous hardware, etc. However, there is no solution in the relevant technology on how to register and authenticate computing power for terminals.

### SUMMARY

The embodiments of the present application provide a registration method, an apparatus, and readable storage medium, so as to provide computing power services using a terminal.

In a first aspect, a registration method is provided in the embodiment of the present disclosure, including:
sending, by a terminal, a first registration request to a core network device, where the first registration request is configured to request a computing power registration and a computing power authentication for the terminal;
receiving, by the terminal, a first registration response sent by the core network device.

Optionally, the first registration request includes:
a first indication, configured to indicate whether the terminal is a computing power node;
first computing power authentication data, configured to determine whether the terminal is a valid computing power node.

Optionally, the first registration request further includes one or more of:
a second indication, configured to indicate information of a computing power authentication data allocation agency corresponding to the terminal;
a computing power node capability parameter of the terminal, configured to determine whether the terminal is an available computing power node during the computing power authentication process, and to determine a computing power capability of the terminal after the computing power registration and computing power authentication are complete.

Optionally, the first computing power authentication data includes: a Certification Authority (CA) certificate or a Token; or
the computing node capability parameters of the terminal include one or more of: computing node type, computing power size, computing node location, and computing services deployed on the computing node.

Optionally, before the terminal sends the first registration request to the core network device, the method further includes:
obtaining, by the terminal, the first computing power authentication data from a computing power authentication data allocation agency.

Optionally, when the first registration response indicates that the terminal is authenticated, the first registration response includes a unique identifier of a computing node of the terminal.

In a second aspect, a registration method is provided in the embodiment of the present disclosure, including:
receiving, by a core network device, a first registration request sent by a terminal, where the first registration request is configured to request a computing power registration and a computing power authentication for the terminal;
sending, by a core network device, a second registration request to the computing power authentication device, where the second registration request is configured to request the computing power registration and computing power authentication for the terminal; and
obtaining, by the core network device, a second registration response from the computing power authentication device, and sending a first registration response to the terminal according to the second registration response.

Optionally, the first registration request includes:
a first indication, configured to indicate whether the terminal is a computing power node;
first computing power authentication data, configured to determine whether the terminal is a valid computing power node.

Optionally, the first registration request further includes one or more of:
a second indication, configured to indicate information of a computing power authentication data allocation agency corresponding to the terminal;
a computing power node capability parameter of the terminal, configured to determine whether the terminal is an available computing power node during the authentication process, and to determine a computing power capability of the terminal after successful computing power registration and computing power authentication.

Optionally, the sending, by a core network device, a second registration request to the computing power authentication device includes:
when the first indication is configured to indicate that the terminal is a computing power node, sending, by a core network device, a second registration request to the computing power authentication device.

Optionally, the second registration request includes an identifier of the terminal and the first computing power authentication data.

Optionally, the second registration request further includes one or more of:
a third indication, configured to indicate information of a computing power authentication data allocation agency corresponding to the terminal;
computing node capability parameters of the terminal.

Optionally, if the first registration response indicates that the terminal is authenticated, the first registration response includes a unique identifier of a computing node of the terminal.

In a third aspect, a registration method is further provided in the embodiment of the present disclosure, including:
receiving, by a computing power authentication device, a second registration request from the core network device, where the second registration request is sent by the core network device after receiving the first registration request from the terminal;
authenticating, by the computing power authentication device, the terminal according to the second registration request to obtain an authentication result;
sending, by the computing power authentication device, a second registration response to the core network device, where the second registration response includes the authentication result;
the first registration request is configured to request computing power registration and computing power authentication for the terminal, and the second registration request is configured to request computing power registration and computing power authentication for the terminal.

Optionally, the second registration request includes the identifier of the terminal and the first computing power authentication data;
authenticating, by the computing power authentication device, the terminal according to the second registration request to obtain an authentication result, including:
   obtaining, by the computing power authentication device, second computing power authentication data of the terminal according to the identifier of the terminal;
   comparing, by the computing power authentication device, the first computing power authentication data with the second computing power authentication data to obtain the authentication result.

Optionally, the second registration request includes an identifier of the terminal, the first computing power authentication data, and the computing power node capability parameters of the terminal;
the computing power authentication device authenticating the terminal according to the second registration request to obtain an authentication result includes:
obtaining, by the computing power authentication device, second computing power authentication data of the terminal according to the identifier of the terminal; comparing, by the computing power authentication device, the first computing power authentication data with the second computing power authentication data;
when the first computing power authentication data and the second computing power authentication data match, authenticating, by the computing power authentication device, the terminal according to the terminal computing power node capability parameters to obtain an authentication result.

Optionally, the computing power authentication device includes a computing power network management center;
the computing power authentication device obtaining second computing power authentication data of the terminal according to the identifier of the terminal, includes:
the computing power network management center determines the computing power authentication data allocation agency corresponding to the terminal according to the identifier of the terminal;
the computing power network management center obtains the second computing power authentication data of the terminal from the computing power authentication data allocation agency corresponding to the terminal.

Optionally, the second registration request further includes: a third indication configured to indicate information of a computing power authentication data allocation agency corresponding to the terminal;
the computing power network management center determining the computing power authentication data allocation agency corresponding to the terminal according to the identifier of the terminal, includes:
the computing power network management center determines the computing power authentication data allocation agency corresponding to the terminal according to the identifier of the terminal and the third indication.

Optionally, the computing power network management center determining the computing power authentication data allocation agency corresponding to the terminal according to the identifier of the terminal, includes:
the computing power network management center determining the computing power authentication data allocation agency corresponding to the terminal according to the identifier of the terminal and the target correspondence relationship stored in the computing power network management center;
the target corresponding relationship is the corresponding relationship between the terminal identifier and the computing power authentication data allocation agency.

Optionally, the computing power network management center obtaining the second computing power authentication data of the terminal from the computing power authentication data allocation agency corresponding to the terminal includes:
the computing power network management center sending a first query request to the computing power authentication data allocation agency corresponding to the terminal;
the computing power network management center receiving the second computing power authentication data sent by the computing power authentication data allocation agency corresponding to the terminal.

Optionally, when the computing power authentication device passes the authentication of the terminal, the second registration response includes the unique identifier of the computing power node of the terminal.

Optionally, the method further includes:
the computing power network management center obtaining the third computing power authentication data of the terminal from the computing power authentication data allocation agency, where the third computing power authentication data is updated computing power authentication data.

In a fourth aspect, a registration method is provided in the embodiment of the present disclosure, including:
receiving, by a computing power authentication data allocation agency, the first query request from the computing power network management center;
sending, by the computing power authentication data allocation agency, the second computing power authentication data of the terminal to the computing power network management center according to the first query request, for authenticating the terminal;
where the first query request is sent by the computing power network management center after receiving the second registration request of the core network device, and the second registration request is sent by the core network device after receiving the first registration request of the terminal; the first registration request is configured to request computing power registration and computing power authentication for the terminal, and the second registration request is configured to request computing power registration and computing power authentication for the terminal.

Optionally, the method further includes:
sending, by the computing power authentication data allocation agency, the third computing power authentication data of the terminal to the computing power network management center, where the third computing power authentication data is updated computing power authentication data.

Optionally, the method further includes:
sending, by the computing power authentication data allocation agency, the first computing power authentication data to the terminal, and stores the corresponding relationship between the terminal and the first computing power authentication data.

Optionally, the method further includes:
the computing power authentication data allocation agency managing all or part of the computing power authentication data of the terminal.

In a fifth aspect, a registration apparatus is provided in the embodiment of the present disclosure, applied to a terminal, including: a memory, a transceiver, and a processor:
the memory is used for storing a computer program; the transceiver is used for transmitting and receiving data under a control of the processor; and the processor is used for reading the computer program in the memory to perform:
sending a first registration request to a core network device, where the first registration request is configured to request a computing power registration and a computing power authentication for the terminal;
receiving a first registration response sent by the core network device.

In a sixth aspect, a registration apparatus is provided in the embodiment of the present disclosure, applied to a core network device, including: a memory, a transceiver, and a processor:
the memory is used for storing a computer program; a transceiver is used for transmitting and receiving data under the control of the processor; and a processor is used for reading the computer program in the memory to perform:
receiving a first registration request sent by a terminal, where the first registration request is configured to request a computing power registration and computing power authentication for the terminal;
sending a second registration request to a computing power authentication device, where the second registration request is configured to request the computing power registration and computing power authentication for the terminal;
obtaining a second registration response from the computing power authentication device, and sending a first registration response to the terminal according to the second registration response.

In a seventh aspect, a registration apparatus is provided in the embodiment of the present disclosure, applied to computing power authentication device, including: a memory, a transceiver, and a processor:
the memory is used for storing a computer program; the transceiver is used for transmitting and receiving data under the control of the processor; and the processor is used for reading the computer program in the memory to perform:
receiving a second registration request from the core network device, where the second registration request is sent by the core network device after receiving the first registration request from the terminal;
authenticating the terminal according to the second registration request to obtain an authentication result;
sending a second registration response to the core network device, where the second registration response includes the authentication result;
where the first registration request is configured to request the computing power registration and computing power authentication for the terminal, and the second registration request is configured to request the computing power registration and computing power authentication for the terminal.

In an eighth aspect, a registration apparatus is provided in the embodiment of the present disclosure, applied to a computing power authentication data allocation agency, including: a memory, a transceiver, and a processor:
the memory is used for storing a computer program; the transceiver is used for transmitting and receiving data under the control of the processor; and the processor is used for reading the computer program in the memory to perform:
receiving a first query request from a computing power network management center;
sending, according to the first query request, the second computing power authentication data of the terminal to the computing power network management center for authenticating the terminal;
where the first query request is sent by the computing power network management center after receiving the second registration request of the core network device, and the second registration request is sent by the core network device after receiving the first registration request of the terminal; the first registration request is configured to request computing power registration and computing power authentication for the terminal, and the second registration request is configured to request computing power registration and computing power authentication for the terminal.

In a ninth aspect, a registration apparatus is provided in the embodiment of the present disclosure, applied to a terminal, including:
a first sending unit, configured to send a first registration request to a core network device, where the first registration request is configured to request a computing power registration and computing power authentication for the terminal;
a first receiving unit, configured to receive a first registration response sent by the core network device.

In a tenth aspect, a registration apparatus is provided in the embodiment of the present disclosure, applied to a core network device, including:
a first receiving unit, configured to receive a first registration request sent by a terminal, where the first registration request is configured to request a computing power registration and computing power authentication for the terminal;
a first sending unit, configured to send a second registration request to a computing power authentication device, where the second registration request is configured to request the computing power registration and computing power authentication for the terminal; and
a first processing unit, configured to obtain a second registration response from the computing power authentication device, and send a first registration response to the terminal according to the second registration response.

In an eleventh aspect, a registration apparatus is provided in the embodiment of the present disclosure, applied to computing power authentication device, including:
a first receiving unit, configured to receive a second registration request from a core network device, where the second registration request is sent by the core network device after receiving the first registration request from the terminal;
a first authentication unit, configured to authenticate the terminal according to the second registration request to obtain an authentication result;
a first sending unit, configured to send a second registration response to the core network device, where the second registration response includes the authentication result;
the first registration request is configured to request computing power registration and computing power authentication for the terminal, and the second registration request is configured to request computing power registration and computing power authentication for the terminal.

In a twelfth aspect, a registration apparatus is provided in the embodiment of the present disclosure, applied to a computing power authentication data allocation agency, including:
a first receiving unit, configured to receive a first query request from a computing power network management center;
a first sending unit, configured to send second computing power authentication data of the terminal to the computing power network management center according to the first query request, so as to authenticate the terminal;
where the first query request is sent by the computing power network management center after receiving the second registration request of the core network device, and the second registration request is sent by the core network device after receiving the first registration request of the terminal; the first registration request is configured to request computing power registration and computing power authentication for the terminal, and the second registration request is configured to request computing power registration and computing power authentication for the terminal.

In a thirteenth aspect, a processor-readable storage medium is provided in the embodiment of the present disclosure, storing a computer program, where the computer program is configured to cause the processor to execute the method hereinabove.

In an embodiment of the present application, computing power registration and computing power authentication may be performed on the terminal, so that computing power services can be provided by using the terminal.

### BRIEF DESCRIPTION OF THE DRAWINGS

FIG.1 is a first flowchart of a registration method provided in an embodiment of the present application;
FIG.2 is a second flowchart of the registration method provided in an embodiment of the present application;
FIG.3 is a third flowchart of the registration method provided in an embodiment of the present application;
FIG.4 is a fourth flowchart of the registration method provided in an embodiment of the present application;
FIG.5 is a fifth flowchart of the registration method provided in an embodiment of the present application;
FIG.6 is a first structural diagram of a registration apparatus provided in an embodiment of the present application;
FIG.7 is a second structural diagram of the registration apparatus provided in an embodiment of the present application;
FIG.8 is a third structural diagram of the registration apparatus provided in an embodiment of the present application;
FIG.9 is a fourth structural diagram of the registration apparatus provided in an embodiment of the present application;
FIG.10 is a fifth structural diagram of a registration apparatus provided in an embodiment of the present application;
FIG.11 is a sixth structural diagram of the registration apparatus provided in an embodiment of the present application;
FIG.12 is a seventh structural diagram of a registration apparatus provided in an embodiment of the present application; and
FIG. 13 is an eighth structural diagram of the registration apparatus provided in an embodiment of the present application.

### DETAILED DESCRIPTION

In the embodiments of the present application, the term "and/or" describes the association relationship of the associated objects, indicating that three relationships may exist. For example, A and/or B may represent: A exists alone, A and B exist at the same time, and B exists alone. The character "/" generally indicates that the associated objects before and after are in an "or" relationship.

In the embodiments of the present application, the term "plurality" refers to two or more than two, and other quantifiers are similar.

The following will be combined with the drawings in the embodiments of the present application to clearly and completely describe the technical solutions in the embodiments of the present application. Obviously, the described embodiments are only part of the embodiments of the present application, not all of the embodiments. Based on the embodiments in the present application, all other embodiments obtained by ordinary technicians in this field without creative work are within the scope of protection of this application.

The embodiments of the present application provide a registration method and device for providing computing power services using a terminal.

The method and the device are based on the same application concept. Since the method and the device solve the problem in a similar principle, the implementation of the device and the method can refer to each other, and the repeated parts will not be repeated.

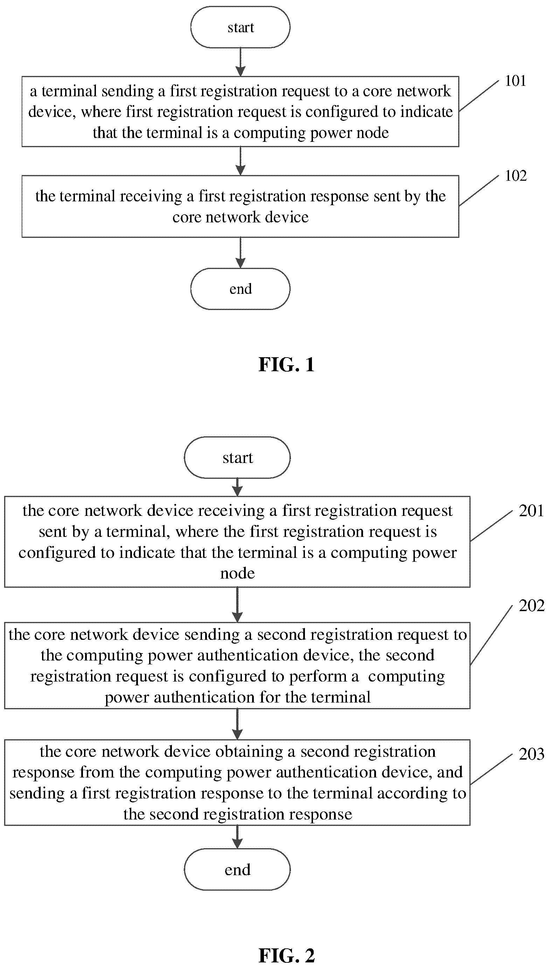

The registration method is provided in an embodiment of the present application, as shown in FIG. 1, including the following steps:
Step 101: sending, by a terminal, a first registration request to a core network device, where the first registration request is configured to request a computing power registration and a computing power authentication for the terminal.

The first registration request includes:
a first indication, configured to indicate whether the terminal is a computing power node; the first computing power authentication data is configured to determine whether the terminal is a valid computing power node.

Specifically, in the embodiment of the present application, the first indication in the first registration request is mainly configured to indicate whether the terminal is a computing power node. Among them, a computing power node refers to a node that can provide computing power services to the outside world. The specific implementation of the first indication is not limited in the embodiment of the present application. For example, the first indication can be carried by a field in the first registration request. If the value of this field is "yes", it means that the terminal is a computing power node; if the value of this field is "no", it means that the terminal is not a computing power node.

The "valid computing power node" can be understood as a computing power node that has passed the authentication of the computing power authentication data allocation agency. If the authentication is passed by the computing power authentication data allocation agency, the computing power authentication data can allocate computing power authentication data to the terminal and send it to the terminal. Correspondingly, the terminal can obtain the computing power authentication data. The computing power authentication data can be used as the first computing power authentication data here, so that the computing power authentication device, etc. can determine whether the terminal is a valid computing power node. It should be noted that the authentication method of the computing power authentication data allocation agency is not limited in the embodiments of the present application.

The first computing power authentication data includes: CA certificate or Token. The first computing power authentication data can be obtained by the terminal from the computing power authentication data allocation agency corresponding to the terminal. A terminal may correspond to one or more computing power authentication data allocation agencies. Accordingly, the embodiment of the present application may also include: the terminal obtains the first computing power authentication data from the computing power authentication data allocation agency corresponding to the terminal.

For example, the terminal may send a request to the computing power authentication data allocation agency to obtain the first computing power authentication data. The computing power authentication data allocation agency may generate the computing power authentication data of the terminal and store the correspondence between the terminal identifier and the computing power authentication data. Therefore, when receiving the request from the terminal, the computing power authentication data allocation agency may obtain the first computing power authentication data of the terminal according to the terminal identifier carried in the request from the terminal and the correspondence.

In some embodiments, the first registration request further includes one or more of:
a second indication, configured to indicate the information of the computing power authentication data allocation agency corresponding to the terminal; the computing power node capability parameter of the terminal is configured to determine whether the terminal is an available computing power node during the authentication process, and to determine the computing power capability of the terminal after the computing power registration and computing power authentication are successful.

For example, the second indication may be configured to indicate the identifier of the computing power authentication data allocation agency corresponding to the terminal. The computing power node capability parameters of the terminal include one or more of: computing power node type, computing power size, computing power node location, computing power services deployed on the computing power node, etc.

The "available computing power nodes" can be understood as whether the computing power capabilities of the terminal that has been authenticated by the computing power authentication data allocation agency meet the requirements of the computing power authentication device for computing power nodes, or, it can also be understood as whether the terminal that has been authenticated by the computing power authentication data allocation agency can truly serve as a computing power node.

For example, assuming that the computing power node type required by the computing power certification device is type A, if the computing power node type of the terminal is type B, then it can be considered that the computing power node type of the terminal does not meet the requirements of the computing power certification device and cannot be used as an available computing power node; if the computing power node type of the terminal is type A, then it can be considered that the computing power node type of the terminal meets the requirements of the computing power certification device and can be used as an available computing power node, or it can be further judged in combination with other information.

It should be noted that the information carried in the first registration request may be further expanded as required, and the specific content included in each piece of information may also be further expanded as required.

The core network device may refer to a specific device to achieve the purpose of the solution, or a module or unit in a device to achieve the purpose of the solution. For example, the core network device may include an Access and Mobility Management Function (AMF), etc.

After the core network device receives the first registration request, if the terminal is determined to be a computing power node based on the first registration request, the core network device may request the computing power authentication device to perform computing power authentication on the terminal.

Step 102: receiving, by the terminal, a first registration response sent by the core network device.

The first registration response is formed by the core network device according to the second registration response of the computing power authentication device, where the second registration response includes the authentication result of the computing power authentication device on the terminal. Accordingly, the first registration response can carry the above authentication result.

Specifically, the first registration response may indicate that the authentication is passed or not. If the first registration response indicates that the authentication of the terminal is passed, the first registration response includes the unique identifier of the computing power node of the terminal. The unique identifier of the computing power node is configured to uniquely identify the terminal as a computing power node, which is obtained by the core network device from the computing power authentication device. If the first registration response indicates that the authentication of the terminal is not passed, the first registration response may also include the corresponding reason.

In an embodiment of the present application, computing power registration and computing power authentication may be performed on the terminal, so that computing power services can be provided by using the terminal.

See FIG. 2, which is a flow chart of a registration method provided in an embodiment of the present application. As shown in FIG. 2, the method includes the following steps:
Step 201: receiving, by the core network device, a first registration request sent by a terminal, where the first registration request is configured to request computing power registration and computing power authentication for the terminal.

The content and meaning of the first registration request may refer to the description of the aforementioned method embodiment.

Step 202: sending, by the core network device, a second registration request to the computing power authentication device. The second registration request is configured to request computing power registration and computing power authentication for the terminal.

In this step, the core network device determines whether the terminal is a computing power node according to the first indication in the first registration request. If the first indication indicates that the terminal is a computing power node, the core network device sends a second registration request to the computing power authentication device to perform subsequent computing power registration and computing power authentication processes; otherwise, it can be processed according to the normal terminal registration process.

Optionally, the second registration request includes an identifier of the terminal and the first computing power authentication data. In some embodiments, to facilitate the computing power authentication device to obtain the authentication data of the terminal and perform authentication, the second registration request also includes one or more of:
a third indication, configured to indicate the information of the computing power authentication data allocation agency corresponding to the terminal; the computing power node capability parameters of the terminal.

For example, the third indication may be configured to indicate the identifier of the computing power authentication data allocation agency corresponding to the terminal, etc. The computing power node capability parameters of the terminal include one or more of: computing power node type, computing power size, computing power node location, and computing power services deployed on the computing power node.

Step 203: obtaining, by the core network device, a second registration response from the computing power authentication device, and sending a first registration response to the terminal according to the second registration response.

The second registration response may indicate that the authentication is passed or not. If the second registration response indicates that the authentication of the terminal is passed, the second registration response includes the unique identifier of the computing power node of the terminal. If the second registration response indicates that the authentication of the terminal is not passed, the second registration response may also include the corresponding reason. Correspondingly, the core network device forms the first registration response based on the second registration response and sends the first registration response to the terminal.

In an embodiment of the present application, computing power registration and computing power authentication may be performed on the terminal, so that computing power services can be provided by using the terminal.

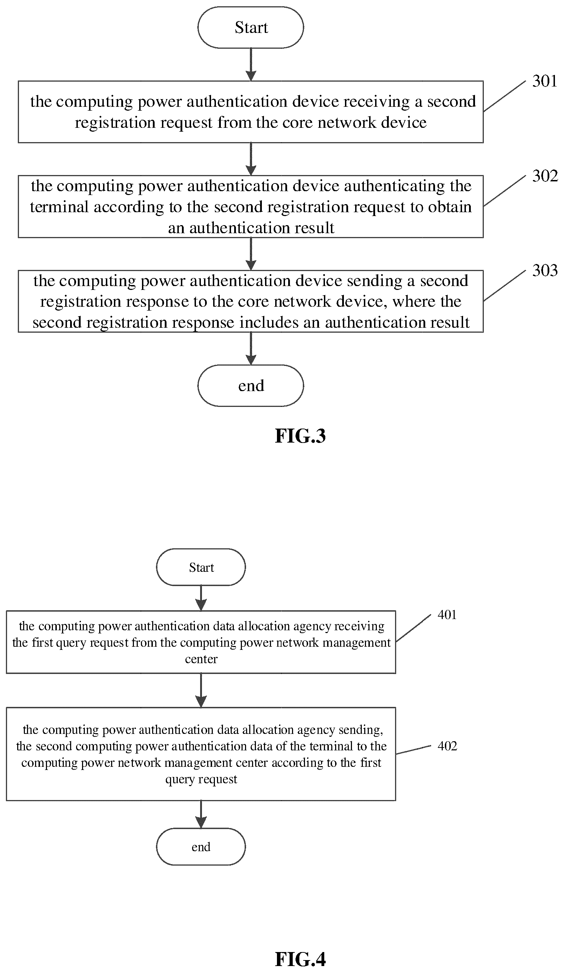

See FIG. 3, which is a flow chart of a registration method provided in an embodiment of the present application. As shown in FIG. 3, the method includes the following steps:
Step 301: receiving, by the computing power authentication device, a second registration request from the core network device. The second registration request is sent by the core network device after receiving the first registration request from the terminal.

The first registration request is configured to request computing power registration and computing power authentication for the terminal, and the second registration request is configured to request computing power registration and computing power authentication for the terminal.

The contents and meanings of the first registration request and the second registration request may refer to the description of the aforementioned method embodiment.

Step 302: authenticating, by the computing power authentication device, the terminal according to the second registration request to obtain an authentication result.

In this step, if the second registration request includes the terminal's identifier and the first computing power authentication data, the computing power authentication device obtains the terminal's second computing power authentication data according to the terminal's identifier, and compares the first computing power authentication data with the second computing power authentication data to obtain an authentication result. The purpose of comparing the two here is to determine whether the terminal is a valid terminal to ensure security.

For example, if the matching degree of the first computing power authentication data and the second computing power authentication data meets the preset value, the terminal can be authenticated, that is, the authentication result is that the terminal is authenticated; otherwise, the terminal may not be authenticated. The preset value can be set as needed.

In this step, if the second registration request includes the terminal's identifier, the first computing power authentication data, and the terminal's computing power node capability parameters, the computing power authentication device obtains the terminal's second computing power authentication data based on the terminal's identifier, and compares the first computing power authentication data with the second computing power authentication data; if the first computing power authentication data and the second computing power authentication data match, the computing power authentication device authenticates the terminal based on the terminal's computing power node capability parameters to obtain an authentication result. Specifically:

(1) The computing power authentication device compares the first computing power authentication data with the second computing power authentication data. The purpose of comparing the two is to determine whether the terminal is a valid terminal to ensure security.

Specifically, the computing power authentication device may consider that the first computing power authentication data and the second computing power authentication data match when the matching degree of the first computing power authentication data and the second computing power authentication data meets a preset value, and the terminal is a valid terminal. The preset value may be set as needed.

(2) When the first computing power authentication data and the second computing power authentication data match, the computing power authentication device authenticates the terminal according to the computing power node capability parameters of the terminal to obtain an authentication result.

When authenticating a terminal based on the terminal computing power node capability parameters, the authentication method depends on the specific implementation of the computing power authentication device. For example, the computing power authentication device can determine whether the authentication is successful based on the computing power node type of the terminal. Specifically, assuming that the computing power node type required by the computing power authentication device is type A, and the computing power node type of the terminal is type B, then it can be determined that the authentication of the terminal is not successful. For another example, assuming that the computing power node required by the computing power network management center needs to be located in location C, and the computing power node location of the terminal indicates that the terminal is located in location C, then it can be determined that the authentication of the terminal is successful.

Of course, in actual applications, the terminal can also be authenticated by combining various information in the above terminal computing power node capability parameters, and after obtaining the authentication results of each information, a certain strategy is adopted to obtain the final authentication result. For example, assuming that a certain proportion of the authentication results obtained through various information indicates that the authentication of the terminal is passed, then the final authentication result is that the authentication of the terminal is passed. The proportion can be set as needed.

In the embodiment of the present application, the computing power authentication device may refer to a specific device to achieve the purpose of the present solution, or may refer to a module or unit in a device to achieve the purpose of the present solution.

Specifically, in the embodiment of the present application, the computing power authentication device can be an independent device. In this case, the computing power authentication device is configured to authenticate the computing power of the terminal, store the computing power data of the terminal, manage the computing power data, etc. The above authentication process is performed by the computing power authentication device.

Alternatively, the computing power authentication device may also be formed by multiple devices, for example, the computing power authentication device may include a computing power network management center and a computing power authentication data allocation agency. The computing power network management center is configured to perform computing power authentication on the terminal, and the computing power authentication data allocation agency is configured to store the computing power data of the terminal, manage the computing power data, etc. In this case, the above authentication process is performed by the computing power network management center.

In the above process, if the computing power authentication device is an independent device, then the computing power authentication device can obtain the second authentication data from itself. That is, the computing power authentication device stores the correspondence between the terminal identifier and the computing power authentication data. For example, the computing power authentication device can obtain the second computing power data of the terminal according to the identifier of the terminal and the correspondence between the terminal identifier and the computing power authentication data.

If the computing power authentication device includes a computing power network management center, then the computing power network management center obtains the second computing power data from the computing power authentication data allocation agency corresponding to the terminal.

In the process of the computing power network management center obtaining the second computing power data from the computing power authentication data allocation agency corresponding to the terminal, the computing power network management center can determine the computing power authentication data allocation agency corresponding to the terminal according to the terminal identification, and obtain the second computing power data. For example, the computing power network management center itself can store the target correspondence between the terminal and the computing power authentication data allocation agency. The computing power network management center can determine the computing power authentication data allocation agency corresponding to the terminal according to the terminal identification and the target correspondence.

Alternatively, in actual applications, one terminal may correspond to one or more computing power authentication data allocation centers. Then, in order to more accurately determine the information of the computing power authentication data allocation agency corresponding to the terminal, in the process of the computing power network management center obtaining the second computing power data from the computing power authentication data allocation agency corresponding to the terminal, the computing power network management center may also determine the computing power authentication data allocation agency corresponding to the terminal according to the third indication included in the second registration request and the terminal identifier, and obtain the second computing power data from the computing power authentication data allocation agency corresponding to the terminal. The third indication is configured to indicate the information of the computing power authentication data allocation agency corresponding to the terminal. For example, the computing power network management center may send a first query request to the computing power authentication data allocation agency corresponding to the terminal, and receive the second computing power authentication data sent by the computing power authentication data allocation agency corresponding to the terminal.

Step 303: sending, by the computing power authentication device, a second registration response to the core network device, where the second registration response includes an authentication result.

The second registration response may indicate that the authentication is passed or not. If the second registration response indicates that the authentication of the terminal is passed, the second registration response includes the unique identifier of the computing power node of the terminal. If the second registration response indicates that the authentication of the terminal is not passed, the second registration response may also include the corresponding reason.

Through the above process, the computing power authentication of the terminal is completed, thereby realizing the computing power registration of the terminal. At this point, the terminal can provide computing power services as a computing power node.

In an embodiment of the present application, computing power registration and computing power authentication may be performed on the terminal, so that computing power services can be provided by using the terminal.

Referring to FIG. 4, FIG. 4 is a flow chart of a registration method provided in an embodiment of the present application. As shown in FIG. 4, the registration method includes the following steps:
Step 401: receiving, by the computing power authentication data allocation agency, the first query request from the computing power network management center;
Step 402: sending, by the computing power authentication data allocation agency, the second computing power authentication data of the terminal to the computing power network management center according to the first query request, for authenticating the terminal;

The first query request is sent by the computing power network management center after receiving the second registration request from the core network device, and the second registration request is sent by the core network device after receiving the first registration request from the terminal; the first registration request is configured to request computing power registration and authentication of the terminal, and the second registration request is configured to request computing power registration and computing power authentication of the terminal.

The first query request is sent by the computing power network management center after receiving the second registration request from the core network device, and the second registration request is sent by the core network device after receiving the first registration request from the terminal. The first registration request is configured to request computing power registration and authentication of the terminal, and the second registration request is configured to request computing power registration and computing power authentication of the terminal.

For example, the first query request may carry the identifier of the terminal. The computing power authentication data allocation agency may generate the computing power authentication data of the terminal and store the correspondence between the terminal identifier and the computing power authentication data. After receiving the first query request, the computing power authentication data allocation agency may determine the computing power authentication data of the terminal based on the identifier of the terminal carried in the first query request and the correspondence.

In some embodiments, the computing power authentication data allocation agency may also send the third computing power authentication data of the terminal to the computing power network management center, where the third computing power authentication data is the updated computing power authentication data. For example, when the computing power data of the terminal changes, the computing power authentication data allocation agency may send the updated computing power authentication data to the computing power network management center.

In some embodiments, the computing power authentication data allocation agency may also send the first computing power authentication data to the terminal and store the correspondence between the terminal and the first computing power authentication data.

In some embodiments, the computing power authentication data allocation agency manages all or part of the computing power authentication data of the terminal, including the generation, change, and revocation of computing power authentication data. Before the terminal registers computing power, the terminal applies to the computing power authentication center for computing power authentication data (such as CA certificate, Token, etc.). The computing power authentication center allocates unique computing power authentication data to the terminal and saves the correspondence between the terminal's unique identifier and the computing power authentication data. When the computing power authentication data of the terminal changes, the computing power authentication center synchronizes the change data to the terminal and the computing power network management center. When the computing power authentication data of the terminal expires, the computing power authentication center sends a revocation notice to the terminal, revokes the computing power authentication data allocated to the terminal, and sends a computing power authentication data expiration notice to the computing power network management center.

In an embodiment of the present application, computing power registration and computing power authentication may be performed on the terminal, so that computing power services can be provided by using the terminal.

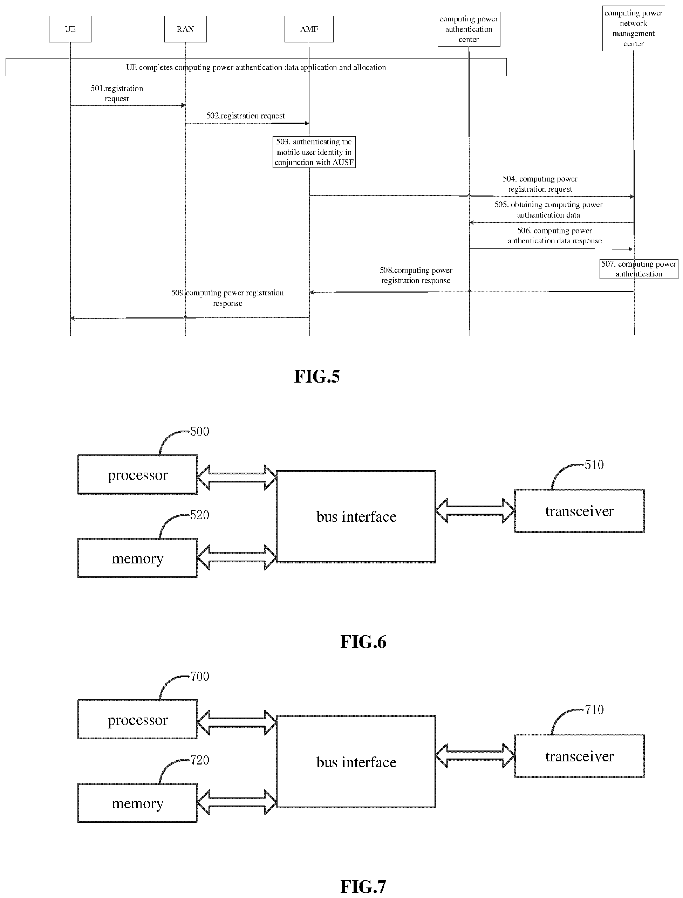

See FIG.5, which is a schematic diagram of the process of computing power registration and authentication in an embodiment of the present application. As shown in FIG.5, the computing power registration and authentication system may include a computing power node (user equipment (UE)), a core network device (AMF), a computing power authentication device, etc. The computing power authentication device includes a computing power network management center and a computing power authentication center (i.e., a computing power authentication data allocation agency). In FIG.5, the core network device takes AMF as an example.

UE is mainly configured to initiate registration requests; when the core network device confirms that the UE is a computing power node based on the registration request initiated by the UE, it requests the computing power authentication device to register and authenticate the UE.

The computing power certification center provides computing power nodes with management of computing power certification data (such as CA certificates, Tokens, etc.).

The computing power network management center provides computing power resource management and computing power orchestration and scheduling services (such as computing power registration, computing power resource management, computing power monitoring, computing power orchestration and scheduling, etc.) for computing power nodes (UE).

UE applies to the computing power certification center for computing power certification data (such as CA certificate, Token, etc.) before becoming a valid and trusted computing power node of the computing power network management center. The computing power certification center allocates unique computing power certification data to the UE and saves the correspondence between the UE unique identifier and the computing power certification data.

The computing power authentication center manages the computing power authentication data throughout its life cycle, including the generation, change, and revocation of computing power authentication data. Before the UE registers computing power, the UE applies to the computing power authentication center for computing power authentication data (such as CA certificates, tokens, etc.). The computing power authentication center allocates unique computing power authentication data to the UE and saves the correspondence between the UE's unique identifier and the computing power authentication data. When the UE's computing power authentication data changes, the computing power authentication center synchronizes the change data to the UE and the computing power network management center. When the UE's computing power authentication data expires, the computing power authentication center sends a revocation notification to the UE, revokes the computing power authentication data allocated to the UE, and sends a computing power authentication data expiration notification to the computing power network management center.

The computing power network management center can also subscribe to computing power authentication data change notifications from the computing power authentication center, and trigger change notifications when the computing power authentication data changes.

In conjunction with FIG.5, the process may include:
Step 501: the UE initiating a registration process, and sending a registration request to a radio access network (RAN), where the registration request includes computing power information of the UE. The computing power information may include:
   (1) Computing power node indication (i.e., first indication): indicates whether the UE is a computing power node. When the value of the computing power node indication is "yes", it means that the UE is a computing power node, and the AMF needs to parse the computing power information and send a computing power registration request to the computing power network management center; when the value of the computing power node indication is "no", the normal UE registration process is executed.
      The computing power node indication is a parameter of the computing power node itself, which can be configured when the UE initiates a registration request, or can come from the UE when it leaves the factory.
   (2) Computing power authentication data (i.e., first computing power authentication data): when the value of the computing power node indication is "yes", that is, when the UE is a computing power node, it carries the computing power authentication data allocated by the computing power authentication center;
   (3) Information about the computing power certification data allocation agency: This parameter is assigned the unique identifier of the computing power certification center that allocates computing power certification data;
   (4) Computing node capability parameters: including computing node type, computing power size, computing node location, computing services deployed on the computing node, etc.
Step 502: RAN selecting a suitable AMF and forwarding the registration request to the AMF.
Step 503: after receiving the registration request, the AMF authenticating the mobile user identity of the UE in conjunction with the Authentication Server Function (AUSF).
Step 504: For users whose UE identity authentication is passed, the AMF parsing the UE registration request and submits the computing power registration request to the computing power network management center according to the computing power node instruction.

The computing power registration request carries: the unique identifier of the UE, computing power authentication data (first computing power authentication data), information of the computing power authentication data allocation agency, and computing power node capability parameters.

Step 505: the computing power network management center querying the computing power authentication data of the UE from the computing power authentication center, based on the unique identifier of the UE in the computing power registration request.

Step 506: the computing power authentication center retrieving the saved computing power authentication data through the unique identifier of the UE, and feeds back the result (i.e., the second computing power authentication data) to the computing power network management center through a computing power authentication data response.

Step 507: the computing power network management center performing computing power authentication on the UE, mainly in the following ways:
The first method: trusted identity authentication of computing power nodes. That is, the first computing power authentication data is compared with the second computing power authentication data.

For example, if the matching degree between the first computing power authentication data and the second computing power authentication data meets a preset value, the terminal can be authenticated. The preset value can be set as needed.

The second method is to determine the availability of computing nodes. This means determining the type, location, and size of computing nodes to determine whether the resources meet the management scope and requirements of the computing network management center.

This method depends on the specific implementation of the computing power network management center. For example, the computing power network management center can determine whether the authentication is passed based on the computing power node type of the terminal. Specifically, assuming that the computing power node type required by the computing power network management center is type A, and the computing power node type of the UE is type B, then it can be determined that the authentication of the terminal is not passed. For another example, assuming that the computing power node required by the computing power network management center needs to be located in location C, and the computing power node location of the UE indicates that the UE is located in location C, then it can be determined that the authentication of the terminal is passed.

Of course, in actual applications, the terminal can also be authenticated by combining various information of computing power node capability parameters, and after obtaining the authentication results through various information, a certain strategy is adopted to obtain the final authentication result. For example, assuming that a certain proportion of the authentication results obtained through various information indicates that the authentication of the terminal is passed, then the final authentication result is that the authentication of the terminal is passed. The proportion can be set as needed.

The third method: a combination of the first and second methods.

In this authentication method, a decision can be made by combining the results of the two authentication methods. For example, if the result obtained by one of the two authentication methods indicates that the authentication is successful, it can be considered that the authentication of the terminal is successful; if the results obtained by both of the two authentication methods indicate that the authentication is successful, it can be considered that the authentication of the terminal is successful, etc.

Step 508: the computing power network management center feeding back a computing power registration response to the AMF.

When the authentication is successful, the computing power network management center accepts the computing power registration, allocates a unique identifier of the computing power node to the UE, and feeds back a computing power registration response to the AMF, which carries the allocated unique identifier of the computing power node; when the authentication fails, the computing power network management center rejects the computing power registration and feeds back a computing power registration response to the AMF, which carries the reason for rejecting the registration, such as authentication failure, inconsistent resource type, resource location beyond the management scope, computing power size does not meet management requirements, etc.

Step 508: the AMF feeding back a computing power registration response to the UE, completing the computing power registration process of the UE in the computing power network management center.

In an embodiment of the present application, computing power registration and computing power authentication may be performed on the terminal, so that computing power services can be provided by using the terminal.

The technical solution provided in the embodiment of the present application can be applied to a variety of systems, especially the fifth generation mobile communication technology (5th Generation Mobile Communication Technology, 5G) system. For example, the applicable system can be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a world-wide interoperability for microwave access (WiMAX) system, a 5G new radio (NR) system, etc. These various systems include terminal equipment and network equipment. The system may also include core network parts, such as the Evolved Packet System (EPS), 5G System (5GS), etc.

The terminal device involved in the embodiment of the present application may be a device that provides voice and/or data connectivity to a user, a handheld device with a wireless connection function, or other processing devices connected to a wireless modem. In different systems, the name of the terminal device may also be different. For example, in a 5G system, the terminal device may be called a user equipment (UE). A wireless terminal device can communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present application.

As shown in FIG. 6, the registration apparatus according to the embodiment of the present application is applied to a core network device, including: a processor 600, configured to read a program in a memory 620 to perform:
receiving a first registration request sent by a terminal, where the first registration request is configured to request computing power registration and authentication of the terminal;
sending a second registration request to the computing power authentication device, where the second registration request is configured to request computing power registration and computing power authentication for the terminal; and
obtaining a second registration response from the computing power authentication device, and send a first registration response to the terminal according to the second registration response; and
a transceiver 610, configured to receive and send data under the control of the processor 600.

In FIG.6, the bus architecture can include any number of interconnected buses and bridges, specifically one or more processors represented by processor 600 and various circuits of memory represented by memory 620 are linked together. The bus architecture can also link various other circuits such as peripherals, regulators, and power management circuits together, which are all well known in the art, so they are not further described herein. The bus interface provides an interface. The transceiver 610 can be a plurality of components, that is, including a transmitter and a receiver, providing a unit for communicating with various other devices on a transmission medium. The processor 600 is responsible for managing the bus architecture and general processing, and the memory 620 can store data used by the processor 600 when performing operations.

The processor 600 may be a central processing unit (CPU), an application specific integrated circuit (ASIC), a field programmable gate array (FPGA) or a complex programmable logic device (CPLD). The processor may also adopt a multi-core architecture.

The processor 600 is responsible for managing the bus architecture and general processing, and the memory 620 can store data used by the processor 600 when performing operations.

In some embodiments, the first registration request includes:
a first indication, configured to indicate whether the terminal is a computing power node;
a first computing power authentication data, configured to determine whether the terminal is a valid computing power node.

In some embodiments, the first registration request further includes one or more of:
a second indication, configured to indicate the information of the computing power authentication data allocation agency corresponding to the terminal;
a computing power node capability parameter of the terminal, configured to determine whether the terminal is an available computing power node during the authentication process, and to determine the computing power capability of the terminal after successful computing power registration and computing power authentication.

In some embodiments, the second registration request includes an identifier of the terminal and first computing power authentication data.

In some embodiments, the processor 600 is configured to read the program in the memory 620 and perform the following process:
when the first indication is configured to indicate that the terminal is a computing power node, sending a second registration request to the computing power authentication device.

In some embodiments, the second registration request further includes one or more of:
a third indication, configured to indicate the information of the computing power authentication data allocation agency corresponding to the terminal;
computing node capability parameters of the terminal.

In some embodiments, if the first registration response indicates that the terminal is authenticated, the first registration response includes a unique identifier of a computing power node of the terminal.

It should be noted here that the above-mentioned device provided in the embodiment of the present application can implement all the method steps implemented by the core network equipment in the above-mentioned method embodiment, and can achieve the same technical effect. The parts and beneficial effects of this embodiment that are the same as the method embodiment will not be described in detail here.

As shown in FIG. 7, a registration apparatus of an embodiment of the present application is applied to a computing power authentication device, including: a processor 700, which is configured to read the program in a memory 720 to perform:
receiving a second registration request from a core network device, where the second registration request is sent by the core network device after receiving the first registration request from the terminal;
authenticating the terminal according to the second registration request and obtain an authentication result;
sending a second registration response to the core network device, where the second registration response includes an authentication result;
the first registration request is configured to request computing power registration and authentication of the terminal, and the second registration request is configured to request computing power registration and computing power authentication of the terminal; and
a transceiver 710, configured to receive and send data under the control of the processor 700.

In FIG. 7, the bus architecture may include any number of interconnected buses and bridges, specifically one or more processors represented by processor 700 and various circuits of memory represented by memory 720 are linked together. The bus architecture may also link together various other circuits such as peripherals, voltage regulators, and power management circuits, which are well known in the art and are therefore not further described herein. The bus interface provides an interface. The transceiver 710 may be a plurality of components, i.e., a transmitter and a receiver, providing a unit for communicating with various other devices on a transmission medium. The processor 700 is responsible for managing the bus architecture and general processing, and the memory 720 may store data used by the processor 700 when performing operations.

The processor 700 may be a central processing unit (CPU), an application specific integrated circuit (ASIC), a field programmable gate array (FPGA) or a complex programmable logic device (CPLD). The processor may also adopt a multi-core architecture.

The processor 700 is responsible for managing the bus architecture and general processing, and the memory 720 can store data used by the processor 700 when performing operations.

The second registration request includes the terminal identifier and the first computing power authentication data; the processor 700 is configured to read the program in the memory 720 to perform:
obtaining second computing power authentication data of the terminal according to the identifier of the terminal;
comparing the first computing power authentication data with the second computing power authentication data to obtain an authentication result.

The second registration request includes the terminal identifier, the first computing power authentication data, and the computing power node capability parameter of the terminal; the processor 700 is configured to read the program in the memory 720 to perform:
obtaining the second computing power authentication data of the terminal according to the terminal identifier; compare the first computing power authentication data and the second computing power authentication data; when the first computing power authentication data and the second computing power authentication data match, authenticate the terminal according to the terminal computing power node capability parameters to obtain an authentication result.

In some embodiments, the computing power authentication device includes a computing power network management center; a processor 700, configured to read a program in a memory 720 to perform:
according to the terminal identification, determining the computing power authentication data allocation agency corresponding to the terminal;
obtaining the second computing power authentication data of the terminal from the computing power authentication data allocation agency corresponding to the terminal.

In some embodiments, the second registration request further includes: a third indication configured to indicate information of a computing power authentication data allocation agency corresponding to the terminal; the processor 700 is configured to read a program in the memory 720 to perform:
according to the terminal identification and the third indication, determining the computing power authentication data allocation agency corresponding to the terminal.

The processor 700 is configured to read the program in the memory 720 to perform:
determining the computing power authentication data allocation agency corresponding to the terminal according to the terminal identification and the target correspondence relationship stored in the computing power network management center;
the target correspondence is the correspondence between the terminal identifier and the computing power authentication data allocation agency.

The processor 700 is configured to read the program in the memory 720 to perform:
sending a first query request to a computing power authentication data allocation agency corresponding to the terminal;
receiving the second computing power authentication data sent by the computing power authentication data allocation agency corresponding to the terminal.

In some embodiments, if the computing power authentication device passes the authentication of the terminal, the second registration response includes the unique identifier of the computing power node of the terminal.

The processor 700 is configured to read the program in the memory 720 to perform:
obtaining the third computing power authentication data of the terminal from the computing power authentication data allocation agency, where the third computing power authentication data is updated computing power authentication data.

It should be noted here that the above-mentioned device provided in the embodiment of the present application can implement all the method steps implemented by the computing power authentication device in the above-mentioned method embodiment, and can achieve the same technical effect. The parts and beneficial effects that are the same as those in the method embodiment will not be described in detail here.

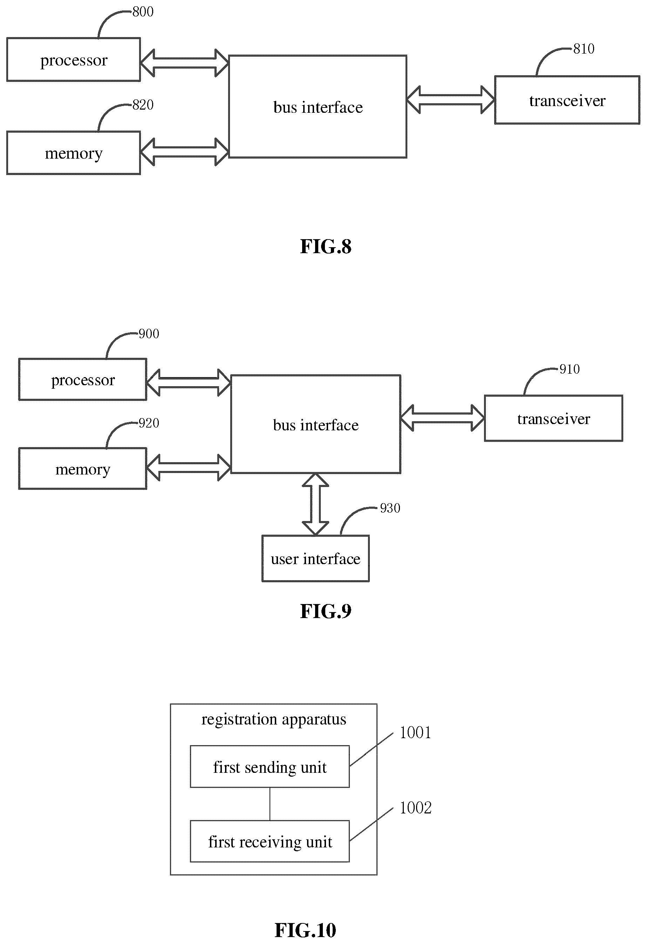

As shown in FIG.8, a registration apparatus of an embodiment of the present application is applied to a computing power authentication data allocation agency, including: a processor 800, which is configured to read the program in a memory 820 to perform:
receiving a first query request from a computing power network management center;
according to the first query request, sending the second computing power authentication data of the terminal to the computing power network management center for authenticating the terminal;
the first query request is sent by the computing power network management center after receiving the second registration request from the core network device, and the second registration request is sent by the core network device after receiving the first registration request from the terminal; the first registration request is configured to request computing power registration and authentication of the terminal, and the second registration request is configured to request computing power registration and computing power authentication of the terminal; and
a transceiver 810, configured to receive and send data under the control of the processor 800.

In FIG.8, the bus architecture may include any number of interconnected buses and bridges, specifically one or more processors represented by processor 800 and various circuits of memory represented by memory 820 are linked together. The bus architecture may also link together various other circuits such as peripherals, voltage regulators, and power management circuits, which are well known in the art and are therefore not further described herein. The bus interface provides an interface. The transceiver 810 may be a plurality of components, including a transmitter and a receiver, providing a unit for communicating with various other devices on a transmission medium. The processor 800 is responsible for managing the bus architecture and general processing, and the memory 820 may store data used by the processor 800 when performing operations.

The processor 800 may be a central processing unit (CPU), an application specific integrated circuit (ASIC), a field programmable gate array (FPGA) or a complex programmable logic device (CPLD). The processor may also adopt a multi-core architecture.

The processor 800 is responsible for managing the bus architecture and general processing, and the memory 820 can store data used by the processor 800 when performing operations.

The processor 800 is configured to read the program in the memory 820 to perform:
sending the third computing power authentication data of the terminal to the computing power network management center, where the third computing power authentication data is the updated computing power authentication data.

The processor 800 is configured to read the program in the memory 820 to perform:
sending the first computing power authentication data to the terminal, and storing the corresponding relationship between the terminal and the first computing power authentication data.

The processor 800 is configured to read the program in the memory 820 to perform:
managing all or part of the terminal's computing power authentication data.

It should be noted here that the above-mentioned device provided in the embodiment of the present application can implement all the method steps implemented by the computing power authentication data allocation agency in the above-mentioned method embodiment, and can achieve the same technical effect. The parts and beneficial effects that are the same as those in the method embodiment will not be described in detail here.

As shown in FIG. 9, a registration apparatus of an embodiment of the present application is applied to a terminal, and includes: a processor 900, which is configured to read the program in a memory 920 to perform:
sending a first registration request to the core network device, where the first registration request is configured to request computing power registration and authentication of the terminal;
receiving a first registration response sent by the core network device; and
a transceiver 910, configured to receive and send data under the control of the processor 900.

In FIG.9, the bus architecture may include any number of interconnected buses and bridges, specifically one or more processors represented by processor 900 and various circuits of memory represented by memory 920 are linked together. The bus architecture can also link various other circuits such as peripherals, voltage regulators, and power management circuits together, which are all well known in the art and are therefore not further described herein. The bus interface provides an interface. The transceiver 910 can be a plurality of components, namely, a transmitter and a receiver, providing a unit for communicating with various other devices on a transmission medium. For different user devices, the user interface 930 can also be an interface that can be connected to external or internal devices, and the connected devices include but are not limited to keypads, displays, speakers, microphones, joysticks, etc.

The processor 900 is responsible for managing the bus architecture and general processing, and the memory 920 can store data used by the processor 900 when performing operations.

The processor 900 may be a central processing unit (CPU), an application specific integrated circuit (ASIC), a field programmable gate array (FPGA) or a complex programmable logic device (CPLD). The processor may also adopt a multi-core architecture.

The processor calls the computer program stored in the memory to execute any method provided in the embodiments of the present application according to the obtained executable instructions. The processor and the memory can also be arranged physically separately.

The processor 900 is further configured to read the program to perform:
Obtaining the first computing power authentication data from a computing power authentication data allocation agency corresponding to the terminal.

In some embodiments, if the first registration response indicates that the terminal is authenticated, the first registration response includes a unique identifier of a computing power node of the terminal.

The first registration request may refer to the description of the aforementioned method embodiment.

It should be noted here that the above-mentioned device provided in the embodiment of the present application can implement all the method steps implemented by the terminal in the above-mentioned method embodiment, and can achieve the same technical effect. The parts and beneficial effects of this embodiment that are the same as the method embodiment will not be described in detail here.

As shown in FIG.10, a registration apparatus according to an embodiment of the present application is applied to a terminal and includes:
a first sending unit 1001, configured to send a first registration request to a core network device, where the first registration request is configured to request computing power registration and authentication of the terminal; a first receiving unit 1002, configured to receive a first registration response sent by the core network device.

The first registration request may refer to the description of the aforementioned method embodiment.

In some embodiments, the apparatus may further include:
a first acquisition unit, configured to obtain the first computing power authentication data from the computing power authentication data allocation agency corresponding to the terminal.

If the first registration response indicates that the terminal is authenticated, the first registration response includes the unique identifier of the computing power node of the terminal.

It should be noted here that the above-mentioned device provided in the embodiment of the present application can implement all the method steps implemented by the terminal in the above-mentioned method embodiment, and can achieve the same technical effect. The parts and beneficial effects of this embodiment that are the same as the method embodiment will not be described in detail here.

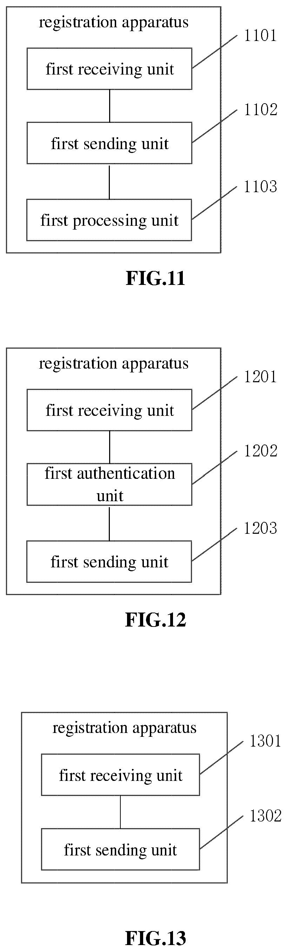

In FIG. 11, a registration apparatus according to an embodiment of the present application is applied to a core network device, including:
a first receiving unit 1101, configured to receive a first registration request sent by a terminal, where the first registration request is configured to request computing power registration and authentication of the terminal; a first sending unit 1102, configured to send a second registration request to a computing power authentication device, where the second registration request is configured to request computing power registration and computing power authentication of the terminal; a first processing unit 1103, configured to obtain a second registration response from the computing power authentication device, and send a first registration response to the terminal according to the second registration response.

The first registration request and the second registration request may refer to the description of the aforementioned method embodiment.

In some embodiments, the first sending unit is configured to send a second registration request to the computing power authentication device when the first indication is configured to indicate that the terminal is a computing power node.

In some embodiments, if the first registration response indicates that the terminal is authenticated, the first registration response includes a unique identifier of a computing power node of the terminal.

It should be noted here that the above-mentioned device provided in the embodiment of the present application can implement all the method steps implemented by the core network equipment in the above-mentioned method embodiment, and can achieve the same technical effect. The parts and beneficial effects of this embodiment that are the same as the method embodiment will not be described in detail here.

As shown in FIG. 12, a registration apparatus of an embodiment of the present application is applied to a computing power authentication device, including:
a first receiving unit 1201, configured to receive a second registration request from a core network device, where the second registration request is sent by the core network device after receiving the first registration request from the terminal; a first authentication unit 1202, configured to authenticate the terminal according to the second registration request to obtain an authentication result; a first sending unit 1203, configured to send a second registration response to the core network device, where the second registration response includes the authentication result; where the first registration request is configured to request computing power registration and authentication for the terminal, and the second registration request is configured to request computing power registration and computing power authentication for the terminal.

The first registration request and the second registration request may refer to the description of the aforementioned method embodiment.

In some embodiments, if the second registration request includes the terminal identifier and the first computing power authentication data; the first authentication unit includes:
a acquisition subunit, configured to obtain the second computing power authentication data of the terminal according to the terminal identification; the first authentication subunit is configured to compare the first computing power authentication data with the second computing power authentication data to obtain the authentication result.

In some embodiments, the second registration request includes an identifier of the terminal, first computing power authentication data, and computing power node capability parameters of the terminal; the first authentication unit includes:
a first acquisition subunit, configured to obtain the second computing power authentication data of the terminal according to the identifier of the terminal; the second authentication subunit is configured to compare the first computing power authentication data with the second computing power authentication data;
a second acquisition subunit, configured to authenticate the terminal according to the terminal computing power node capability parameters to obtain an authentication result when the first computing power authentication data and the second computing power authentication data match.

In some embodiments, the computing power authentication device includes a computing power network management center; and the acquisition subunit includes:
a first determination module, configured to determine the computing power authentication data allocation agency corresponding to the terminal according to the terminal identification; the first acquisition module is configured to obtain the second computing power authentication data of the terminal from the computing power authentication data allocation agency corresponding to the terminal.

In some embodiments, the second registration request also includes: a third indication, configured to indicate information of a computing power authentication data allocation agency corresponding to the terminal; and a first determination module, configured to determine the computing power authentication data allocation agency corresponding to the terminal based on the terminal identifier and the third indication.

In some embodiments, the first determination module is configured to determine the computing power authentication data allocation agency corresponding to the terminal according to the identifier of the terminal and the target correspondence relationship stored in the computing power network management center;
The target correspondence is the correspondence between the terminal identifier and the computing power authentication data allocation agency.

In some embodiments, the first acquisition module includes:
a first sending submodule, configured to send a first query request to the computing power authentication data allocation agency corresponding to the terminal; the first receiving submodule is configured to receive the second computing power authentication data sent by the computing power authentication data allocation agency corresponding to the terminal.

In some embodiments, if the computing power authentication device passes the authentication of the terminal, the second registration response includes the unique identifier of the computing power node of the terminal.

In some embodiments, the apparatus may further include:
a first acquisition unit, configured to obtain the third computing power authentication data of the terminal from the computing power authentication data allocation agency, where the third computing power authentication data is updated computing power authentication data.

It should be noted here that the above-mentioned device provided in the embodiment of the present application can implement all the method steps implemented by the computing power authentication device in the above-mentioned method embodiment, and can achieve the same technical effect. The parts and beneficial effects that are the same as those in the method embodiment will not be described in detail here.

As shown in FIG.13, a registration apparatus of an embodiment of the present application is applied to a computing power authentication data allocation agency, including:
a first receiving unit 1301, configured to receive a first query request from a computing power network management center; a first sending unit 1302, configured to send second computing power authentication data of the terminal to the computing power network management center according to the first query request, so as to authenticate the terminal;
the first query request is sent by the computing power network management center after receiving the second registration request from the core network device, and the second registration request is sent by the core network device after receiving the first registration request from the terminal; the first registration request is configured to request computing power registration and authentication of the terminal, and the second registration request is configured to request computing power registration and computing power authentication of the terminal.

In some embodiments, the apparatus may further include:
a second sending unit, configured to send the third computing power authentication data of the terminal to the computing power network management center, where the third computing power authentication data is the updated computing power authentication data.

In some embodiments, the apparatus may further include:
a third sending unit, configured to send the first computing power authentication data to the terminal and store the corresponding relationship between the terminal and the first computing power authentication data.

In some embodiments, the apparatus may further include:
a first processing unit, configured to manage all or part of the computing power authentication data of the terminal.

It should be noted here that the above-mentioned device provided in the embodiment of the present application can implement all the method steps implemented by the computing power authentication data allocation agency in the above-mentioned method embodiment, and can achieve the same technical effect. The parts and beneficial effects that are the same as those in the method embodiment will not be described in detail here.

It should be noted that the division of units in the embodiments of the present application is schematic and is only a logical function division. There may be other division methods in actual implementation. In addition, each functional unit in each embodiment of the present application may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present application is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the various embodiments of the present application. The aforementioned storage medium includes: U disk, mobile hard disk, read-only memory (Read-Only Memory, ROM), random access memory (Random Access Memory, RAM), disk or optical disk and other media that can store program code.

It should be noted here that the above-mentioned device provided in the embodiment of the present application can implement all the method steps implemented in the above-mentioned method embodiment, and can achieve the same technical effect. The parts and beneficial effects of this embodiment that are the same as those in the method embodiment will not be described in detail here.

An embodiment of the present application also provides a processor-readable storage medium, on which a program is stored. When the program is executed by the processor, the various processes of the above-mentioned registration method embodiment are implemented and the same technical effect can be achieved. To avoid repetition, it will not be repeated here. The readable storage medium can be any available medium or data storage device that can be accessed by the processor, including but not limited to magnetic storage (such as floppy disk, hard disk, magnetic tape, magneto-optical (MO)), etc.), optical storage (such as compact disk (CD), digital video disc (DVD), Blu-ray Disc (BD), high-definition versatile disc (HVD), etc.), and semiconductor memory (such as read-only memory (ROM), erasable programmable read-only memory (EPROM), electrically erasable programmable read only memory (EEPROM), non-volatile memory (NAND FLASH), solid state disk (SSD), etc.).

Those skilled in the art will appreciate that the embodiments of the present application may be provided as methods, systems, or computer program products. Therefore, the present application may take the form of a complete hardware embodiment, a complete software embodiment, or an embodiment combining software and hardware. Moreover, the present application may take the form of a computer program product implemented on one or more computer-usable storage media (including but not limited to disk storage and optical storage, etc.) containing computer-usable program codes.

The present application is described with reference to the flowcharts and/or block diagrams of the methods, devices (systems), and computer program products according to the embodiments of the present application. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to generate a machine, so that the instructions executed by the processor of the computer or other programmable data processing device generate a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual implementation, they can be fully or partially integrated into one physical entity, or they can be physically separated. These modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device for implementation. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more digital signal processors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The terms "first", "second", etc. in the specification and claims of this application are configured to distinguish similar objects, and are not necessarily configured to describe a specific order or sequence. It should be understood that the numbers used in this way can be interchanged where appropriate, so that the embodiments of the application described herein can be implemented in an order other than those illustrated or described herein.

It should be noted that, in this article, the terms "include", "includes" or any other variations thereof are intended to cover non-exclusive inclusion, so that a process, method, article or device including a series of elements includes not only those elements, but also other elements not explicitly listed, or also includes elements inherent to such process, method, article or device. In the absence of further restrictions, an element defined by the sentence "includes a..." does not exclude the existence of other identical elements in the process, method, article or device including the element.

Through the description of the above implementation methods, those skilled in the art can clearly understand that the above-mentioned embodiment methods can be implemented by means of software plus a necessary general hardware platform, and of course by hardware, but in many cases the former is a better implementation method. Based on this understanding, the technical solution of the present application, or the part that contributes to the relevant technology, can be embodied in the form of a software product, which is stored in a storage medium (such as ROM/RAM, disk, CD), and includes a number of instructions for a terminal (which can be a mobile phone, computer, server, air conditioner, or network equipment, etc.) to execute the methods of each embodiment of the present application.

The embodiments of the present application are described above in conjunction with the accompanying drawings, but the present application is not limited to the above-mentioned specific implementation methods. The above-mentioned specific implementation methods are merely illustrative and not restrictive. Under the guidance of the present application, ordinary technicians in this field can also make many forms without departing from the purpose of the present application and the scope of the claims, all of which are within the scope of the present application.

## Claims

1. A registration method, comprising:
sending, by a terminal, a first registration request to a core network device, wherein the first registration request is configured to request a computing power registration and a computing power authentication for the terminal;
receiving, by the terminal, a first registration response sent by the core network device.

2. The method according to claim 1, wherein the first registration request comprises:
a first indication, configured to indicate whether the terminal is a computing power node;
first computing power authentication data, configured to determine whether the terminal is a valid computing power node.

3. The method according to claim 2, wherein the first registration request further comprises one or more of:
a second indication, configured to indicate information of a computing power authentication data allocation agency corresponding to the terminal; or
a computing power node capability parameter of the terminal, configured to determine whether the terminal is an available computing power node during the computing power authentication process, and to determine a computing power capability of the terminal after the computing power registration and computing power authentication are complete.

4. The method according to claim 3, wherein
the first computing power authentication data comprises: a Certification Authority (CA) certificate or a Token; or
the computing node capability parameters of the terminal comprise one or more of: computing node type, computing power size, computing node location, or computing services deployed on the computing node.

5. The method according to any one of claims 2 to 4, wherein before the terminal sending the first registration request to the core network device, the method further comprises:
obtaining, by the terminal, the first computing power authentication data from a computing power authentication data allocation agency.

6. The method according to claim 1, wherein when the first registration response indicates that the terminal is authenticated, the first registration response comprises a unique identifier of a computing node of the terminal.

7. A registration method comprising:
receiving, by a core network device, a first registration request sent by a terminal, wherein the first registration request is configured to request a computing power registration and a computing power authentication for the terminal;
sending, by a core network device, a second registration request to the computing power authentication device, wherein the second registration request is configured to request the computing power registration and computing power authentication for the terminal; and
obtaining, by the core network device, a second registration response from the computing power authentication device, and sending, by the core network device, a first registration response to the terminal according to the second registration response.

8. The method according to claim 7, wherein the first registration request comprises:
a first indication, configured to indicate whether the terminal is a computing power node;
first computing power authentication data, configured to determine whether the terminal is a valid computing power node.

9. The method according to claim 8, wherein the first registration request further comprises one or more of:
a second indication, configured to indicate information of a computing power authentication data allocation agency corresponding to the terminal; or
a computing power node capability parameter of the terminal, configured to determine whether the terminal is an available computing power node during the authentication process, and to determine a computing power capability of the terminal after successful computing power registration and computing power authentication.

10. The method according to claim 8, wherein sending, by a core network device, a second registration request to the computing power authentication device comprises:
when the first indication is configured to indicate that the terminal is a computing power node, sending, by a core network device, a second registration request to the computing power authentication device.

11. The method according to claim 8, wherein the second registration request comprises an identifier of the terminal and the first computing power authentication data.

12. The method according to claim 11, wherein the second registration request further comprises one or more of:
a third indication, configured to indicate information of a computing power authentication data allocation agency corresponding to the terminal; or
computing node capability parameters of the terminal.

13. The method according to claim 7, wherein if the first registration response indicates that the terminal is authenticated, the first registration response comprises a unique identifier of a computing node of the terminal.

14. A registration method comprising:
receiving, by a computing power authentication device, a second registration request from a core network device, wherein the second registration request is sent by the core network device after the core network device receives the first registration request from the terminal;
authenticating, by the computing power authentication device, the terminal according to the second registration request to obtain an authentication result; and
sending, by the computing power authentication device, a second registration response to the core network device, wherein the second registration response comprises the authentication result;
wherein the first registration request is configured to request computing power registration and computing power authentication for the terminal, and the second registration request is configured to request computing power registration and computing power authentication for the terminal.

15. The method according to claim 14, wherein the second registration request comprises an identifier of the terminal and a first computing power authentication data;
the authenticating, by the computing power authentication device, the terminal according to the second registration request to obtain the authentication result, comprising:
obtaining, by the computing power authentication device, a second computing power authentication data of the terminal according to the identifier of the terminal;
comparing, by the computing power authentication device, the first computing power authentication data with the second computing power authentication data to obtain the authentication result.

16. The method according to claim 14, wherein the second registration request comprises an identifier of the terminal, the first computing power authentication data, and the computing power node capability parameters of the terminal;
the computing power authentication device authenticating the terminal according to the second registration request to obtain the authentication result comprises:
obtaining, by the computing power authentication device, a second computing power authentication data of the terminal according to the identifier of the terminal; comparing, by the computing power authentication device, the first computing power authentication data with the second computing power authentication data;
when the first computing power authentication data and the second computing power authentication data match, authenticating, by the computing power authentication device, the terminal according to the terminal computing power node capability parameters to obtain an authentication result.

17. The method according to claim 15 or 16, wherein the computing power authentication device comprises a computing power network management center;
the obtaining, by the computing power authentication device, the second computing power authentication data of the terminal according to the identifier of the terminal, comprising:
determining, by the computing power network management center, the computing power authentication data allocation agency corresponding to the terminal according to the identifier of the terminal;
obtaining, by the computing power network management center, the second computing power authentication data of the terminal from the computing power authentication data allocation agency corresponding to the terminal.

18. The method according to claim 17, wherein the second registration request further comprises: a third indication configured to indicate information of a computing power authentication data allocation agency corresponding to the terminal;
the computing power network management center determining the computing power authentication data allocation agency corresponding to the terminal according to the identifier of the terminal, comprises:
determining, by the computing power network management center, the computing power authentication data allocation agency corresponding to the terminal according to the identifier of the terminal and the third indication.

19. The method according to claim 17, wherein the computing power network management center determines the computing power authentication data allocation agency corresponding to the terminal according to the identifier of the terminal, comprises:
determining, by the computing power network management center, the computing power authentication data allocation agency corresponding to the terminal according to the identifier of the terminal and a target correspondence relationship stored in the computing power network management center;
wherein the target corresponding relationship is the corresponding relationship between the identifier of the terminal and the computing power authentication data allocation agency.

20. The method according to claim 17, wherein the computing power network management center obtaining the second computing power authentication data of the terminal from the computing power authentication data allocation agency corresponding to the terminal comprises:
sending, by the computing power network management center, a first query request to the computing power authentication data allocation agency corresponding to the terminal;
receiving, by the computing power network management center, the second computing power authentication data sent by the computing power authentication data allocation agency corresponding to the terminal.

21. The method according to claim 14, wherein when the computing power authentication device passes the authentication of the terminal, the second registration response comprises a unique identifier of the computing power node of the terminal.

22. The method according to claim 17, further comprising:
obtaining, by the computing power network management center, the third computing power authentication data of the terminal from the computing power authentication data allocation agency, wherein the third computing power authentication data is updated computing power authentication data.

23. A registration method comprising:
receiving, by a computing power authentication data allocation agency, a first query request from a computing power network management center;
sending, by the computing power authentication data allocation agency, the second computing power authentication data of the terminal to the computing power network management center according to the first query request, for authenticating the terminal;
wherein the first query request is sent by the computing power network management center after receiving the second registration request of the core network device, and the second registration request is sent by the core network device after receiving the first registration request of the terminal; the first registration request is configured to request a computing power registration and a computing power authentication for the terminal, and the second registration request is configured to request a computing power registration and a computing power authentication for the terminal.

24. The method according to claim 23, further comprising:
sending, by the computing power authentication data allocation agency, a third computing power authentication data of the terminal to the computing power network management center, wherein the third computing power authentication data is updated computing power authentication data.

25. The method according to claim 23, further comprising:
sending, by the computing power authentication data allocation agency, a first computing power authentication data to the terminal, and storing a corresponding relationship between the terminal and the first computing power authentication data.

26. The method according to claim 23, further comprising:
managing, by the computing power authentication data allocation agency, all or part of the computing power authentication data of the terminal.

27. A registration apparatus, applied to a terminal, comprising: a memory, a transceiver, and a processor, wherein
the memory is used for storing a computer program; the transceiver is used for transmitting and receiving data under a control of the processor; and the processor is used for reading the computer program in the memory to perform:
sending a first registration request to a core network device, wherein the first registration request is configured to request a computing power registration and a computing power authentication for the terminal;
receiving a first registration response sent by the core network device.

28. A registration apparatus, applied to a core network device, comprising: a memory, a transceiver, and a processor, wherein
the memory is used for storing a computer program; a transceiver is used for transmitting and receiving data under the control of the processor; and a processor is used for reading the computer program in the memory to perform:
receiving a first registration request sent by a terminal, wherein the first registration request is configured to request a computing power registration and computing power authentication for the terminal;
sending a second registration request to a computing power authentication device, wherein the second registration request is configured to request the computing power registration and computing power authentication for the terminal; and
obtaining a second registration response from the computing power authentication device, and sending a first registration response to the terminal according to the second registration response.

29. A registration apparatus, applied to a computing power authentication device, comprising: a memory, a transceiver, and a processor, wherein
the memory is used for storing a computer program; the transceiver is used for transmitting and receiving data under the control of the processor; and the processor is used for reading the computer program in the memory to perform:
receiving a second registration request from the core network device, wherein the second registration request is sent by the core network device after receiving the first registration request from the terminal;
authenticating the terminal according to the second registration request to obtain an authentication result; and
sending a second registration response to the core network device, wherein the second registration response comprises the authentication result;
wherein the first registration request is configured to request the computing power registration and computing power authentication for the terminal, and the second registration request is configured to request the computing power registration and computing power authentication for the terminal.

30. A registration apparatus, applied to a computing power authentication data allocation agency, comprising: a memory, a transceiver, and a processor, wherein
the memory is used for storing a computer program; the transceiver is used for transmitting and receiving data under the control of the processor; and the processor is used for reading the computer program in the memory to perform:
receiving a first query request from a computing power network management center;
sending, according to the first query request, the second computing power authentication data of the terminal to the computing power network management center for authenticating the terminal;
wherein the first query request is sent by the computing power network management center after receiving the second registration request of the core network device, and the second registration request is sent by the core network device after receiving the first registration request of the terminal; the first registration request is configured to request computing power registration and computing power authentication for the terminal, and the second registration request is configured to request computing power registration and computing power authentication for the terminal.

31. A registration apparatus, applied to a terminal, comprising:
a first sending unit, configured to send a first registration request to a core network device, wherein the first registration request is configured to request a computing power registration and computing power authentication for the terminal;
a first receiving unit, configured to receive a first registration response sent by the core network device.

32. A registration apparatus, applied to a core network device, comprising:
a first receiving unit, configured to receive a first registration request sent by a terminal, wherein the first registration request is configured to request a computing power registration and computing power authentication for the terminal;
a first sending unit, configured to send a second registration request to a computing power authentication device, wherein the second registration request is configured to request the computing power registration and computing power authentication for the terminal; and
a first processing unit, configured to obtain a second registration response from the computing power authentication device, and send a first registration response to the terminal according to the second registration response.

33. A registration apparatus, applied to a computing power authentication device, comprising:
a first receiving unit, configured to receive a second registration request from a core network device, where the second registration request is sent by the core network device after receiving the first registration request from the terminal;
a first authentication unit, configured to authenticate the terminal according to the second registration request to obtain an authentication result; and
a first sending unit, configured to send a second registration response to the core network device, where the second registration response includes the authentication result;
the first registration request is configured to request computing power registration and computing power authentication for the terminal, and the second registration request is configured to request computing power registration and computing power authentication for the terminal.

34. A registration apparatus, applied to a computing power authentication data allocation agency, comprising:
a first receiving unit, configured to receive a first query request from a computing power network management center;
a first sending unit, configured to send second computing power authentication data of the terminal to the computing power network management center according to the first query request, so as to authenticate the terminal;
wherein the first query request is sent by the computing power network management center after receiving the second registration request of the core network device, and the second registration request is sent by the core network device after receiving the first registration request of the terminal; the first registration request is configured to request computing power registration and computing power authentication for the terminal, and the second registration request is configured to request computing power registration and computing power authentication for the terminal.

35. A processor-readable storage medium storing a computer program, wherein the computer program is configured to cause the processor to perform the method according to any one of claims 1 to 6, or the method according to any one of claims 7 to 13, or the method according to any one of claims 14 to 22, or the method according to any one of claims 23 to 26.
